# NEUE EUROPÄISCHE PATENTSCHRIFT

(11) **EP 0 808 753 B2**
(45) Veröffentlichungstag und Bekanntmachung des Hinweises auf die Entscheidung über den Einspruch: **19.12.2007**
(45) Hinweis auf die Patenterteilung: 06.03.2002
(21) Anmeldenummer: 97108061.9
(22) Anmeldetag: 16.05.1997
(51) Int. Cl.: B60S 3/06

(54) **Vertikale Waschbürste**
Vertical washing brush
Brosse de lavage verticale

(30) Priorität: 22.05.1996 DE 19620684
(43) Veröffentlichungstag der Anmeldung: 26.11.1997
(73) Patentinhaber: Otto Christ AG, 87734 Benningen (DE)
(72) Erfinder: Pointner, Xaver Dipl.-Ing, 87474 Buchenberg (DE)
(74) Vertreter: Pfister, Helmut

(56) Entgegenhaltungen:
- EP-A- 0 012 683
- DE-A- 3 723 978
- DE-A- 4 334 132
- DE-B- 1 531 599
- US-A- 4 756 041

## Beschreibung

Die Erfindung betrifft eine Autowaschanlage entsprechend dem Oberbegriff des Anspruches 1.

Bei einer Autowaschstraße wird das Kraftfahrzeug mittels einer Zugkette durch die einzelnen stationären Reinigungsstationen gezogen. Bei einer Portalwaschanlage steht das Kraftfahrzeug fest, und ein portalförmiger Rahmen, an dem die einzelnen Waschbürsten befestigt sind, wird über das Kraftfahrzeug geführt. Durch die relative Bewegung zwischen den Waschbürsten und dem Kraftfahrzeug in Längs- und Querrichtung kann die gesamte Karosserie von den Waschbürsten erreicht und gereinigt werden. Die Waschbürsten werden dazu in Rotation versetzt und in Kontakt zu der Karosserie gebracht. Hierbei reinigen vertikal ausgerichtete Waschbürsten die Seitenflächen und ggf. den Front- und Heckbereich, während eine horizontal ausgerichtete Waschbürste den Front- und Heckbereich, das Dach, die Motorhaube und den Kofferraumdeckel reinigt. Im allgemeinen werden starre Waschbürsten eingesetzt, die eine im wesentlichen zylindrische Waschbürstenform aufweisen.

Durch die Bestrebungen, den Luftwiderstand eines Kraftfahrzeuges zu minimieren, erhalten die Karosserien immer mehr Abwinkelungen und Abrundungen. Solche abgerundete Karosserien sind nicht optimal mit starren, zylindrischen Waschbürsten reinigbar.

Aus der EP 0 012 683 A1 ist eine vertikal ausgerichtete Waschbürste bekannt, die aus wenigstens zwei Bürstenabschnitten besteht und die Bürstenabschnitte über ein Gelenk beziehungsweise über eine elastische Kupplung miteinander verbunden sind. Die Waschbürste ist an ihren beiden Enden gelagert und bei Waschen des Seitenbereichs der Karosserie kommen die beiden Bürstenabschnitte in einen Winkel zueinander, so daß sie sich der gewölbten Form der Karosserie im wesentlichen anpassen. Die Auslenkung beider Bürstenabschnitte ist dabei zur Senkrechten gleich.

Mit dieser Bürste ist es jedoch nicht möglich, die, wegen der angestrebten Stromlinienform weiterhin nach innen eingezogenen und abgerundeten unteren Seiten, Front- und Heckbereiche, die dazu neigen beispielsweise nach einer Fahrt auf einer verschmutzten Fahrbahn besonders stark zu verschmutzen, ausreichend zu reinigen. Insbesondere die untere Halterung der bekannten zweiteiligen Waschbürste müsste unterhalb des Fahrzeuges geführt werden und kollidiert somit gegebenenfalls mit den Rädern oder muß im Bereich der Räder zurückgefahren werden.

Es ist daher aus der DE4334132A1 bekannt, vertikale Waschbürsten vorzusehen, die sich aus winklig zueinander stehenden Waschbürstenabschnitten zusammensetzen, um sich an den Querschnitt des Kraftfahrzeuges anpassen zu können, die jedoch nur einseitig hängend gelagert sind. Die Übertragung der Drehbewegung zwischen den einzelnen Bürstenrohrelementen erfolgt durch ineinandergreifende Zahnkränze, die auf den zugewandten Stirnkanten der Bürstenrohrelemente angeordnet sind. Die Achselemente stehen über eine Parallelogrammführung miteinander in Verbindung, so daß beim Anwinkeln des oberen Achselements das untere Achselement nach wie vor vertikal ausgerichtet verläuft. Durch diese gelenkigen Waschbürsten kann ein zufriedenstellendes Reinigungsergebnis bei abgewinkelten oberen Seitenflächen erzielt werden. Auch hier tritt der Nachteil ein, daß die nach innen eingezogenen und abgerundeten Bereich der unteren Seiten-, Front- und Heckpartien von der Waschbürste nicht erreicht werden. Dort muß daher meistens manuell oder mit einem Dampfstrahlgerät vorgereinigt werden, um ein ausreichendes Waschergebnis zu erzielen.

Der Erfindung liegt die Aufgabe zugrunde, eine Autowaschanlage der eingangs angegebenen Gattung derart zu verbessern, daß auch stromlinienförmige Karosserien mit derartig abgerundeten unteren Seiten-, Front- und Heckbereichen optimal gewaschen werden können. Die Aufgabe wird gemäß der Erfindung dadurch gelöst, daß die Achsanordnung um eine vertikale Achse relativ zum Rahmen verdrehbar ist. Durch diese vorteilhafte Ausführung einer Waschbürste ist der eingezogene untere Seitenbereich der Karosserie gut erreichbar. Dadurch wird das Reinigungsergebnis verbessert, wobei gleichzeitig auf die manuelle Vorwäsche des unteren Karosseriebereiches verzichtet werden kann.

Die Erfindung hat den Vorteil, daß die winklige Achsanordnung im Laufe des Waschprogramms so verdreht wird, daß das untere Achselement und somit der untere Waschbürstenabschnitt stets in Richtung auf das Fahrzeug angewinkelt ausgerichtet ist. Dadurch ist es möglich, die eingezogenen unteren Bereiche der Front und des Hecks, die ebenfalls sehr stark zu Verschmutzungen neigen, gut zu erreichen und optimal zu reinigen.

Es ist günstig, wenn die Verdrehung durch einen separaten Motor erfolgt. Hierdurch kann die Verdrehung in einfacher Weise gesteuert und unabhängig von der Rotation der Waschbürste erfolgen. Weiterhin kann es von Vorteil sein, wenn die Verdrehung mittels eines Schneckengetriebes erfolgt. Durch ein Schneckengetriebe ist die in der Regel relativ langsame Verdrehbewegung der Achsanordnung auch bei einem schnell laufenden Antriebsmotor mit nur einer Getriebestufe oder gegebenenfalls zwei Getriebestufen erreichbar.

Im einzelnen ist die Befestigung der vertikal ausgerichteten Waschbürste an der Traverse des Rahmens in der Weise ausgebildet, daß die Achsanordnung an dem oberen Ende eine Lagerwelle aufweist, über die die Achsanordnung drehbar und hängend an einem Tragelement befestigt ist, das um eine horizontale Achse verschwenkbar mit einem verschiebbaren Schlitten verbunden ist, wobei die Lagerwelle und zumindest das obere Achselement hohl ausgebildet sind, um darin eine Führungsstange für die Parallelogrammführung axial verschiebbar zu lagern. Hierdurch wird zum einen die Verdrehung der Achsanordnung um die vertikale Achse ermöglicht. Zum anderen ist die gesamte Waschbürste noch um die horizontale Achse verschwenkbar. Der Schlitten ist hierbei für die erforderliche Querbewegung der vertikalen Waschbürste relativ zum Fahrzeug verschiebbar an der Traverse des Rahmens gelagert.

Gemäß einer weiteren Ausführungsform der Erfindung ist vorgesehen, daß die Achsanordnung ein oberes und ein mittleres Achselement sowie ein unteres, in Richtung auf das Fahrzeug anwinkelbares Achselement aufweist, wobei das obere Achselement um eine horizontale Achse verschwenkbar an dem Rahmen gelagert und mit dem mittleren Achselement über eine Parallelogrammführung verbunden ist. Die horizontale Achse verläuft hierbei parallel zur Längserstreckung des Fahrzeuges, so daß die Waschbürste im verschwenkten Zustand eine konkave Form in bezug auf das Fahrzeug bildet und sich somit dessen Querschnittsform optimal anpaßt. Dies hat den Vorteil, daß sowohl der abgewinkelte obere Seitenbereich als auch der im allgemeinen vertikale mittlere Seitenbereich als auch der eingezogene, abgerundete oder abgewinkelte untere Seitenbereich der Karosserie gut von der Waschbürste erreicht werden.

Es ist günstig, wenn das untere Achselement mit einem starren Winkel an der Achsanordnung befestigt ist. Es ist aber auch vorgesehen, daß das untere Achselement mit einem verstellbaren Winkel an der Achsanordnung befestigt ist. Die Verstellung des Anstellwinkels kann über Seilzüge oder einen hydraulischen oder pneumatischen Kolben-Zylinderantrieb oder einen elektrischen Antrieb erfolgen. Das Vorsehen einer Verstellmöglichkeit ist vorteilhaft, um beispielsweise das Waschprogramm auf Kastenwagen oder Kleinbusse umzustellen, die derartige eingezogene untere Karosserieabschnitte in der Regel nicht aufweisen. Das untere Achselement ist dann so eingestellt, daß die Waschbürste eine einfache zylindrische Außenkontur aufweist.

Es ist vorteilhaft, wenn die Achsanordnung um die vertikale Achse, ausgehend von einer Position vor dem Fahrzeug im Laufe des Waschvorganges bis zu der Position hinter dem Fahrzeug, um 180° verdrehbar ist. Bei einer bevorzugten Ausführungsform der Erfindung sind Mittel vorgesehen, die den Frontbereich, den Seitenbereich und den Heckbereich des Fahrzeuges erfassen, wobei Stellmittel vorhanden sind, um eine Verdrehung der Achsanordnung um die vertikale Achse, ausgehend von einer Position der Waschbürste vor dem Fahrzeug, in der zumindest das untere Achselement in Richtung auf das Fahrzeug ausgerichtet ist, um 0°, wenn der Frontbereich, um 90°, wenn der Seitenbereich und um 180°, wenn der Heckbereich des Fahrzeuges von der Waschbürste berührt wird, derart zu bewirken, daß das untere Achselement stets in Richtung auf das Fahrzeug angewinkelt verläuft. Diese Mittel können die üblichen Lichtschrankenanordnungen oder dergleichen sein, die für die Steuerung der Querbewegung der Waschbürsten zur Reinigung der Front oder des Hecks des Fahrzeuges ohnehin vorhanden sind.

Weiterhin ist vorgesehen, daß ein Stellmittel vorhanden ist, um das obere Achselement um die horizontale Achse zu verschwenken, wenn der Seitenbereich des Fahrzeuges von der Waschbürste berührt wird. Dieses Stellmittel ist zum Beispiel so gesteuert, daß das obere Achselement bei der Reinigung der Front oder des Hecks des Fahrzeuges nicht verschwenkt wird und somit vertikal ausgerichtet ist und nur während der Seitenwäsche verschwenkt wird und sich dem Querschnitt des Fahrzeuges anpaßt.

Die Erfindung betrifft ferner eine Autowaschanlage mit wenigstens einer vertikal ausgerichteten Waschbürste, die beispielsweise als Portalwaschanlage oder als Autowaschstraße ausgebildet ist.

Durch die Verschwenkung des oberen Waschbürstenabschnitts um die horizontale Achse mit der Parallelogrammführung für den mittleren Waschbürstenabschnitt und der abgewinkelten unteren Waschbürste einerseits sowie der Verdrehung der gesamten Achsanordnung um die vertikale Achse andererseits ist die Waschbürste optimal an eine Fahrzeugkontur angepaßbar. Um ein optimales Waschergebnis zu erreichen ist es günstig, die Einstellung der Waschbürste von der Kontur des Fahrzeuges abhängig zu gestalten. Hierbei ist zum Beispiel vorgesehen, daß die verschiedenen Verschwenkungen bereits beim Starten der Waschanlage in Abhängigkeit der Fahrzeugart programmierbar sind.

Die Autowaschanlage kann dafür mit besonderen Wahlprogrammen ausgestattet sein, die die entsprechenden Verschwenkungen für den Front-, Heck- und Seitenbereich in Abhängigkeit von der Fahrzeugform einstellen. Es ist beispielsweise vorgesehen, daß die Waschanlage ein Programm für übliche Personenkraftwagen, bei welchem eine Verschwenkung der Achsanordnung um die horizontale Achse nur für die Seitenwäsche und eine Verdrehung der Waschbürste um die vertikale Achse für die Seiten-, Front- und Heckwäsche derart erfolgt, daß der untere Waschbürstenabschnitt stets in Richtung auf das Fahrzeug angewinkelt ist, und/oder ein Programm für Kleinbusse oder Kastenwagen aufweist, bei welchem keine Verschwenkung der Achsanordnung um die horizontale Achse und eine Verdrehung der Waschbürste um die vertikale Achse zumindest für die Seitenwäsche derart erfolgt, daß die Anwinkelung des unteren Waschbürstenabschnitts parallel zum Fahrzeug verläuft.

Hierdurch erreicht die Erfindung, daß durch diese Vorprogrammierung die verschiedenen Fahrzeugarten optimal durch die entsprechende Verschwenkung und/oder Verdrehung der Achsanordnung gereinigt werden. Für den Benutzer entsteht auch kein Mehraufwand, da beispielsweise anstelle einer Starttaste Tasten mit den entsprechenden Symbolen, die mit der Starttaste kombiniert sind, vorgesehen sind. Es ist lediglich erforderlich, daß das Fahrzeug stets in der gleichen Richtung in die Waschanlage eingefahren wird. Die Front-, Heck- und Seitenbereiche werden wie bisher durch die üblichen Erfassungsmittel detektiert, und es werden dann die vorprogrammierten Verschwenkungen und/oder Verdrehungen durchgeführt.

Die Erfindung wird im folgenden anhand der schematischen Zeichnung näher erläutert. Es zeigen:
- Fig. 1: eine Waschbürste der Autowaschanlage gemäß der Erfindung,
- Fig. 2: eine Waschbürste der Autowaschanlage gemäß der Erfindung in verschwenkter Position,
- Fig. 3: im Schnitt die Befestigung des unteren Achselementes an der Achsanordnung,
- Fig. 4: im Schnitt den Antrieb der Waschbürste,
- Fig. 5: im Schema die Seitenwäsche eines Fahrzeuges,
- Fig. 6: im Schema die Heckwäsche eines Fahrzeuges ohne vertikale Verdrehung der Achsanordnung,
- Fig. 7: die Seitenansicht auf ein Fahrzeug mit verschiedenen Stellungen der Waschbürste während des Waschvorganges und
- Fig. 8: die Draufsicht auf ein Fahrzeug mit verschiedenen Stellungen der Waschbürste während des Waschvorganges ohne vertikale Verdrehung (a) und mit vertikaler Verdrehung (b) der Achsanordnung.

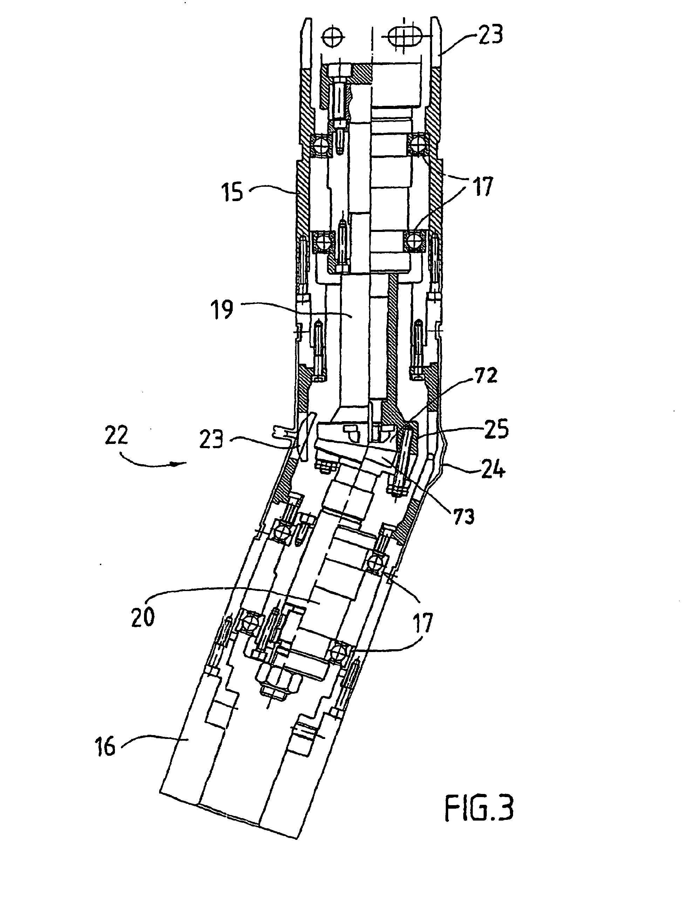

Die in der Zeichnung dargestellte Waschbürste 10 weist einen oberen, einen mittleren und einen unteren Waschbürstenabschnitt 11,12,13 auf. Der obere und der mittlere Waschbürstenabschnitt 11,12 sind gelenkig miteinander verbunden, während der mittlere und der untere Waschbürstenabschnitt 12,13 einen festen Winkel zueinander aufweisen. Die Waschbürstenabschnitte sind auf Bürstenrohrelementen 14,15,16 angeordnet, die über Kugellager 17 (Fig. 3) koaxial drehbar auf entsprechend gelenkig oder winklig zueinander angeordneten Achselementen 18,19,20 einer Achsanordnung gelagert sind. Die gelenkige Verbindung 21 zwischen dem oberen und mittleren Achselement 18,19 erlaubt eine Abwinkelung in derselben Ebene, in der auch die starre Winkelverbindung 22 zwischen dem mittleren und unteren Achselement 19,20 verläuft. Alle Achselemente 18,19,20 liegen somit stets in einer Ebene und können eine in bezug auf das Fahrzeug konkave Form einnehmen, so daß insbesondere alle seitlichen Bereiche gut erreicht werden.

Die Drehmomentübertragung zwischen den einzelnen Bürstenrohrelementen erfolgt über Zahnkränze 23, die auf den einander zugewandten Stirnseiten der jeweiligen Bürstenrohrelemente 14,15,16 angeordnet sind. Es sind aber auch andere Verbindungen, wie Federelemente oder Federkupplungen, vorgesehen, die eine Drehmomentübertragung bei winklig zueinander stehenden Achsen ermöglichen. Die Knickstellen 21,22 sind mit dehnbaren Manschetten 24 gegen Spritzwasser geschützt.

Das untere Achselement 20 ist über ein winkliges Flanschanschlußstück 25 mit dem mittleren Achselement 19 starr verbunden. Das mittlere Achselement 19 ist über eine nicht näher dargestellte Parallelogrammführung mit dem oberen Achselement 18 verbunden. Durch diese Parallelogrammführung wird zum Beispiel bewirkt, daß das mittlere Achselement 19 stets im wesentlichen vertikal ausgerichtet unabhängig von der Winkellage des oberen Achselementes 18 bleibt. Derartige Parallelogrammführungen sind bekannt und bedürfen an dieser Stelle keiner weiteren Erläuterung.

In Fig. 3 ist ein Ausschnitt zwischen dem mittleren (19) und dem unteren (20) Achselement gezeigt. Erfindungsgemäß wird vorgeschlagen, die Abwinkelung zwischen diesen beiden Achselementen 19,20 sowohl im Winkel verstellbar als auch mit einem Festwinkel auszugestalten. In der hier gezeigten Ausgestaltung ist zwischen den beiden Achselementen 19,20 ein fester Winkel vorgesehen. Dies wird durch ein winkel- oder keilartiges Flanschstück 72 an dem unteren Ende des mittleren Achselementes 19 erreicht, das mit einem ebenfalls winkel- oder keilartigen Achselement 73, das am oberen Ende des unteren Achselementes 20 vorgesehen ist, erreichbar ist. Diese beiden Achselemente 72,73 werden bei der Montage miteinander verschraubt. Daraus resultiert eine feste Auslenkung des unteren Achselementes 20 gegenüber dem oberen Achselement 19.

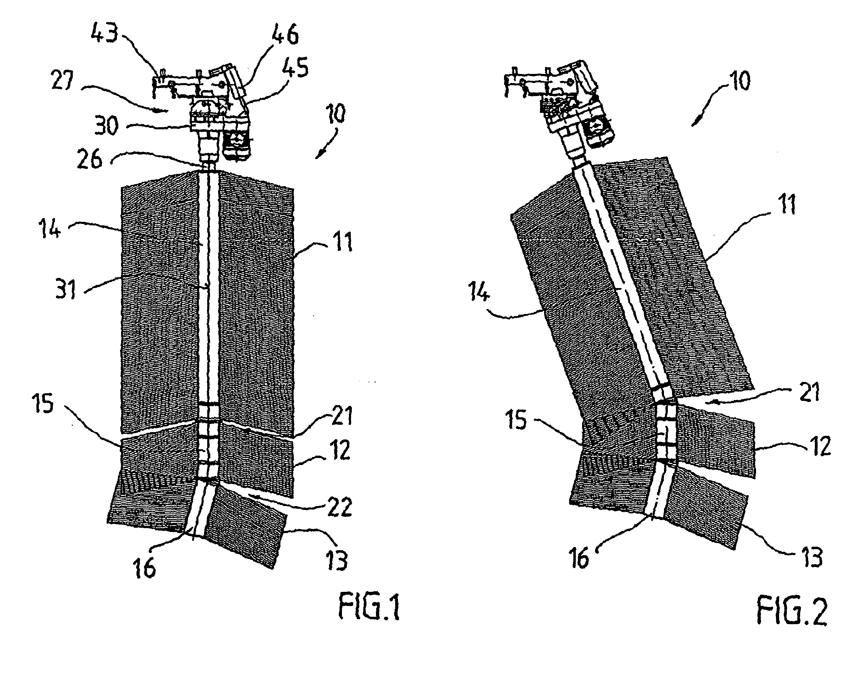

Es kann aber auch vorgesehen werden, daß das obere Achselement geradlinig und starr mit dem mittleren Achselement verbunden ist. Eine derartige Waschbürste entspricht hinsichtlich der Kontur der in Fig. 1 dargestellten Waschbürste, die die dreiteilige Waschbürste in nicht verschwenkter Position zeigt. In Fig. 2 ist die Waschbürste 10 in verschwenkter Position dargestellt.

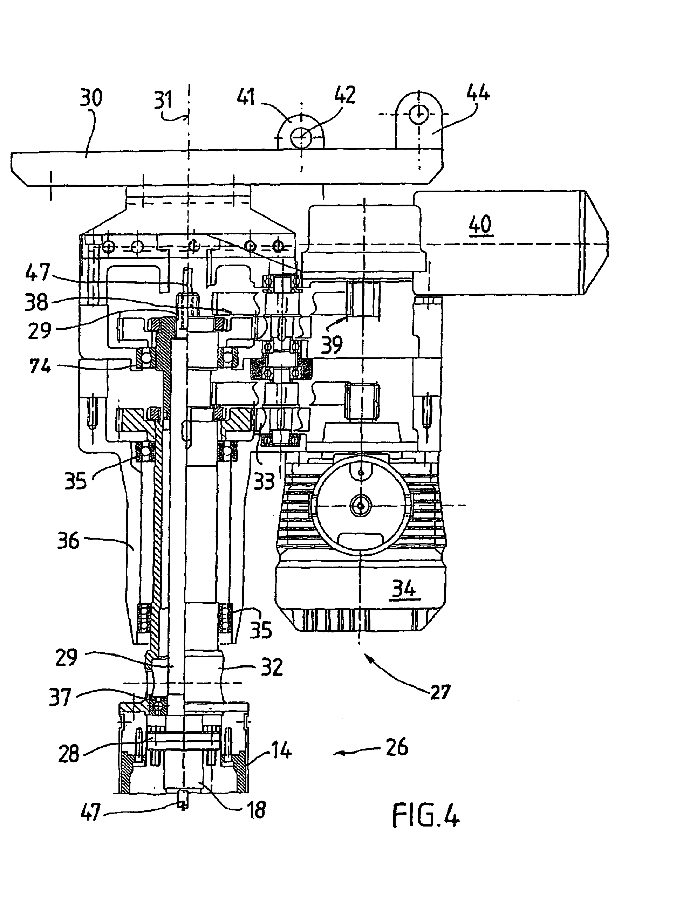

In Fig. 4 ist gezeigt, daß das obere freie Ende 26 der Achsanordnung mit einer Antriebseinrichtung 27 verbunden ist. Die Antriebseinrichtung 27 dient dazu, die Waschbürste 10 in Rotation zu versetzen. Auch ist in einer weiteren Ausgestaltung vorgesehen, daß die Antriebseinrichtung 27 eine Verdrehung der Achsanordnung ermöglicht. Im einzelnen ist die Anordnung so getroffen, daß die Achsanordnung an dem freien Ende 26 über einen Flanschanschluß 28 mit einer Lagerwelle 29 verbunden ist, die drehbar an einem Tragelement 30 gelagert ist. Durch diese Anordnung ist es möglich, daß die Achsanordnung um die vertikal ausgerichtete Achse 31 verschwenkbar an dem Tragelement 30 und somit an dem Rahmen der Autowaschanlage hängend gelagert ist. Eine Verdrehung der Lagerwelle 29 bewirkt, daß die gesamte Achsanordnung relativ zum Kraftfahrzeug um die vertikal ausgerichtete Achse 31 verdreht wird, wobei die Achsanordnung und somit die einzelnen Achselemente 18,19,20 in einer Ebene bleiben.

Das obere Bürstenrohrelement 14 steht in Verbindung mit einer Antriebshülse 32, die über ein Zahnradgetriebe 33 durch einen Motor 34 angetrieben wird. Die Antriebshülse 32 stützt sich hierbei über mehrere Kugellager 35 in dem Getriebegehäuse 36 ab, das fest mit dem Tragelement 30 verbunden ist. Hiermit wird bewirkt, daß die Drehbewegung des Motors 34 in eine Drehbewegung der Antriebshülse 32, der Bürstenrohrelemente 14,15,16 und somit der Waschbürstenabschnitte 11,12,13 um die angewinkelte Achsanordnung herum umgesetzt wird.

Durch die hohl ausgebildete Antriebshülse 32 verläuft die Lagerwelle 29 der Achsanordnung. Im einzelnen ist die Anordnung so getroffen, daß sich die Lagerwelle 29 an einem oberen endständigen Kugellager 74 unmittelbar und über ein weiteres Kugellager 74 mittelbar über die Antriebshülse 32 an dem Gehäuse 36 abstützt. Aufgrund der relativ hohen axialen Belastung durch das Gewicht der Waschbürste können anstelle von herkömmlichen Kugellagern auch andere Wälzlagerungen, zum Beispiel Axial-Pendelrollenlager, eingesetzt werden, die eine höhere axiale Tragkraft haben.

Hierdurch ist es möglich, daß die Ebene der Achsanordnung unabhängig von der Rotation der Bürstenrohrelemente um die vertikale Achse 31 verschwenkbar ist. Die Lagerwelle 29 ist mit einer Stirnradgetriebestufe 38 und einer Schneckengetriebestufe 39 mit einem Antriebsmotor 40 verbunden.

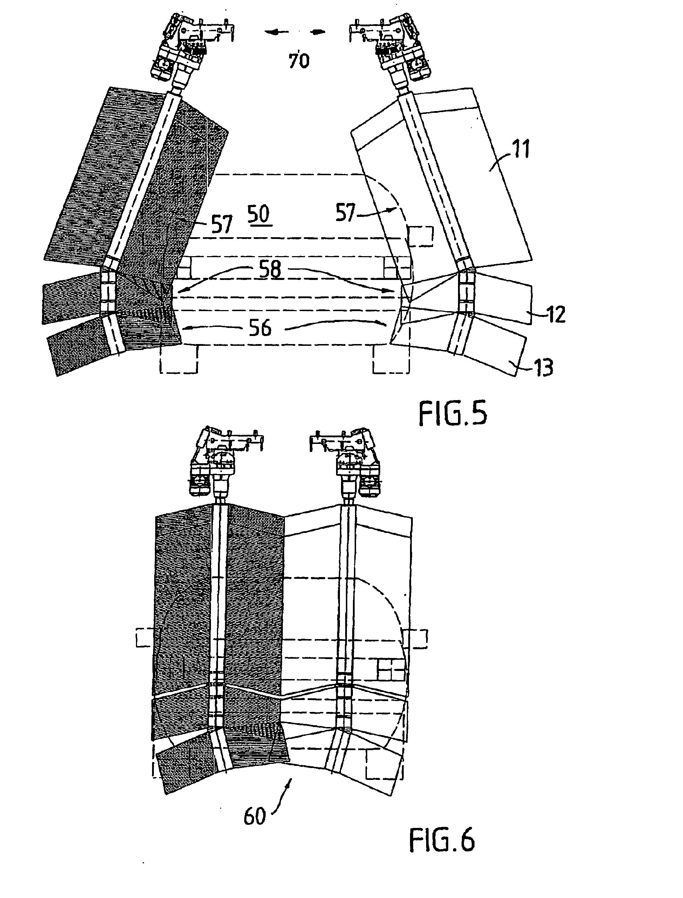

Das Tragelement 30 weist ein erstes Anlenkauge 41 auf, mit dem es um eine horizontale Achse 42 parallel zur Längsrichtung des Fahrzeugs verschwenkbar mit einem Schlitten 43 verbunden ist. Der Schlitten 43 ist verschiebbar an der Traverse des Rahmens der Waschanlage gelagert, um die erforderlichen Querverschiebungen relativ zum Fahrzeug zu ermöglichen. Dies ist zum Beispiel in Fig. 5 durch den Doppelpfeil 70 angedeutet.

Das Tragelement 30 weist ferner ein zweites Anlenkauge 44 auf, das mit der Kolbenstange 45 eines Kolben-Zylinderantriebs 46 gelenkig verbunden ist. Durch den Kolben-Zylinderantrieb 46 kann die Waschbürste 10 um die horizontale Achse 42 verschwenkt werden.

Die Lagerwelle 29 und zumindest das obere Achselement 18 sind hohl ausgebildet, um darin eine Führungsstange 47 für die Parallelogrammführung axial verschiebbar zu lagern. Die Führungsstange ist mit dem Schlitten 43 beispielsweise über ein Langloch verbunden und bewirkt somit die erforderliche Parallelführung. Da die Stange jedoch bei einer Verdrehung der Lagerwelle 29 mit verdreht wird, weist die Führungsstange im oberen und/oder unteren Bereich ein nicht dargestelltes Drehgelenk auf. Das Drehgelenk kann beispielsweise als Muffe ausgebildet sein, die einen in der Lagerwelle geführten Abschnitt mit dem mit dem Schlitten verbundenen Abschnitt der Führungsstange axial fest aber drehbar verbindet. Eine aufwendige Lagerung ist hier nicht erforderlich, da die Lagerwelle lediglich maximal um 180°, also jeweils um 90° in eine Richtung, während eines Waschvorganges verdreht wird.

Die vorstehend beschriebene Ausführungsform erlaubt eine Verschwenkung um eine horizontale Achse, die parallel zur Längserstreckung des Fahrzeugs verläuft. Es ist aber auch möglich, daß die Achsanordnung mit dem oberen Ende 26 hängend an dem Tragelement 30 befestigt ist, das um eine horizontale Achse 42 verschwenkbar mit einem verschiebbaren Schlitten 43 verbunden ist, wobei der Schlitten 43 um eine vertikale Achse verdrehbar und verschiebbar an dem Rahmen gelagert ist. Die vertikale Achse fluchtet hierbei günstigerweise mit der Rotationsachse der Waschbürste. Dies hat den Vorteil, daß bei einer Verdrehung der Achsanordnung um die vertikale Achse die Waschbürste in bezug auf das Fahrzeug konkav verläuft. Hierdurch kann beispielsweise das Heck einer Kombi-Limousine oder die Front eines Kleinbusses besser gereinigt werden, da dadurch die Achse des oberen Waschbürstenabschnittes parallel zur jeweiligen Fahrzeugoberfläche, ob Heck-, Front- oder Seitenpartie, orientiert ist und ein Ausgleichen der Lage der Bürste gerade an den Ecken vermieden wird.

Die Verschwenkungen der Waschbürste um die horizontale Achse 42 und die Verdrehung der Waschbürste um die vertikale Achse 31 während eines Waschvorganges wird im folgenden anhand der Fig. 5 bis 8 erläutert. Um Mißverständnissen vorzubeugen wird darauf hingewiesen, daß bei einer verschwenkten Waschbürste um die horizontale Achse die vertikal ausgerichtete Achse 31 natürlich nicht mehr absolut vertikal, sondern nur noch in einer Ebene vertikal verläuft. Der Einfachheit halber wird vorstehend und im folgenden dennoch von einer vertikalen Achse 31 gesprochen. Auch ist es selbstverständlich, daß in der Regel zwei gegenberliegende Waschbürsten vorhanden sind, die entgegengesetzt verdreht werden müssen. Die Beschreibung beschränkt sich aber auf die Erläuterung der Bewegungen anhand einer Waschbürste.

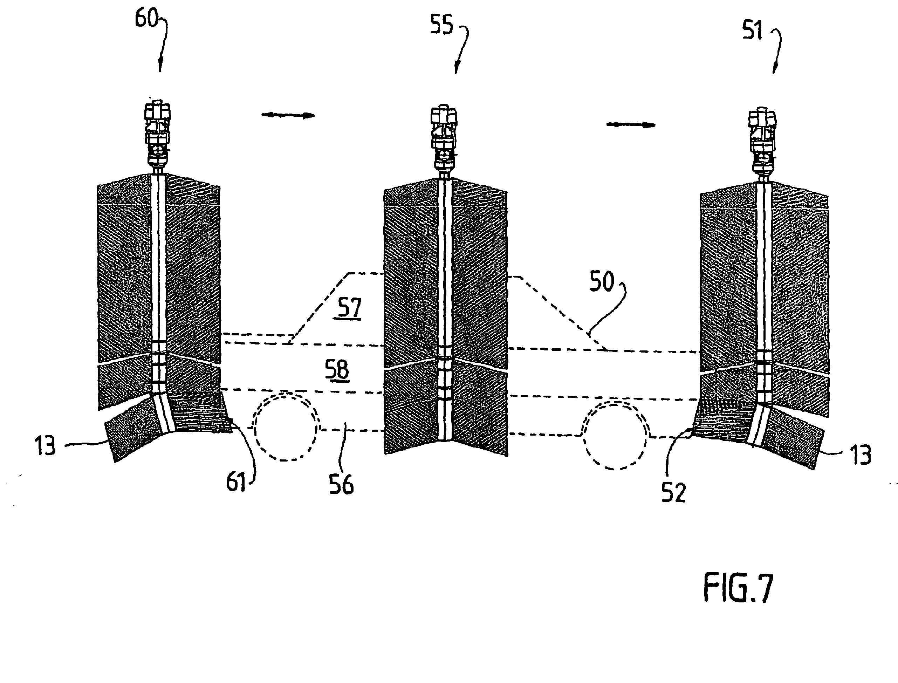

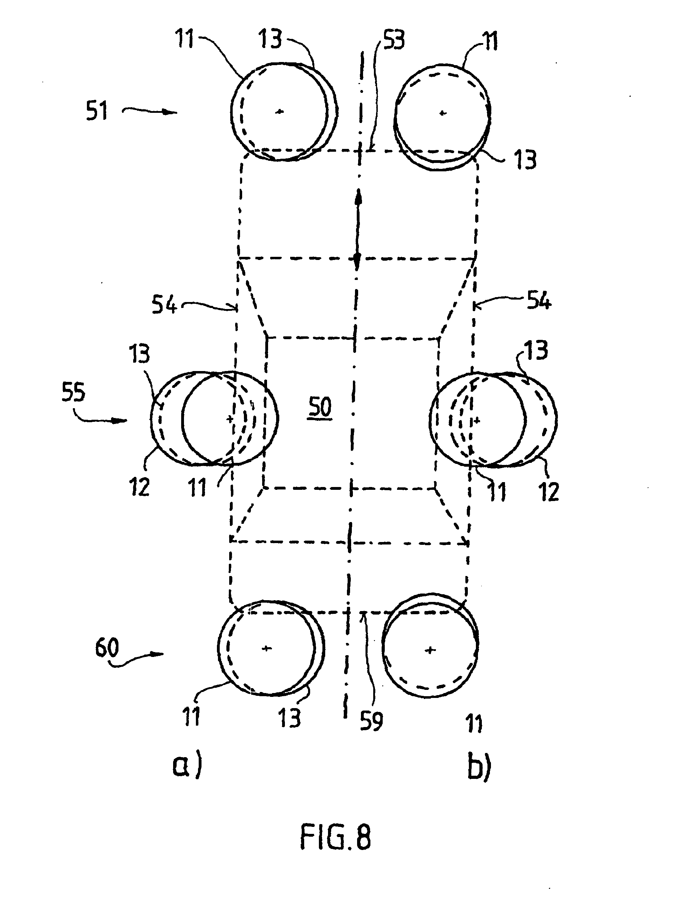

Zu Beginn des Waschvorganges befindet sich die Waschbürste 10 in der Lage 51 vor dem Fahrzeug 50. Bei der verdrehbaren Ausführungsform (Fig. 7, 8b) ist die Achsanordnung so um die vertikale Achse 31 verdreht, daß der untere Waschbürstenabschnitt 13 in Richtung auf das Fahrzeug angewinkelt verläuft. Es ist offensichtlich, daß hierdurch der untere abgewinkelte Karosseriebereich 52 gut erreicht werden kann. Bei der nicht verdrehbaren Ausführungsform (Fig. 6, 8a) verläuft die Abwinkelung des unteren Waschbürstenabschnittes parallel zur Front 53 des Fahrzeuges. Für die Reinigung der Front ist die Waschbürste nicht um die horizontale Achse 42 verschwenkt und der obere und mittlere Bürstenabschnitt verlaufen geradlinig, wie es in den Fig. 6 und 1 dargestellt ist.

Im Zuge der relativen Längsbewegung des Fahrzeuges 50 zur Waschbürste 10 wird der Seitenbereich 54 des Fahrzeugs gereinigt. Während dieser Reinigung befindet sich die Waschbürste 10 neben dem Fahrzeug (Lage 55) und ist bei der verdrehbaren Ausführungsform um 90° (in Fig. 8b im Uhrzeigersinn) verdreht, so daß der untere Waschbürstenabschnitt 13 ebenfalls in Richtung auf das Fahrzeug angewinkelt verläuft, um den unteren abgerundeten seitlichen Karosseriebereich 56 gut zu erreichen.

In dieser seitlichen Lage 55 kann ferner vorgesehen werden, daß das obere Waschbürstenelement 11 um die horizontale Achse mit seinem unterem Ende weg vom Fahrzeug verschwenkt wird und entsprechend den Fig. 7 und 2 eine konkave Form annimmt. Hierdurch bleibt aufgrund der Parallelogrammführung der mittlere Waschbürstenabschnitt 12 im wesentlichen vertikal, während der obere und der untere Waschbürstenabschnitt 11,13 winklig zum mittleren Waschbürstenabschnitt verlaufen, wobei deren dem mittleren Waschbürstenabschnitt 12 abgekehrte Enden in Richtung auf das Fahrzeug ausgerichtet sind. Die Winkel können zwischen 15° und 35° für die obere und zwischen 15° und 30° für die untere Knickstelle 21,22 bemessen sein. Somit werden alle seitlichen Bereiche, nämlich angewinkelter oberer und unterer Karosseriebereich 57,56 sowie der vertikale mittlere Karosseriebereich 58 gut von den jeweiligen Waschbürstenabschnitten 11,13 bzw. 12 erreicht. Bei der nicht verdrehbaren Ausführungsform gemäß Fig. 8b ist der untere Waschbürstenabschnitt 13 während der Seitenwäsche ohnehin in Richtung auf das Fahrzeug angewinkelt.

Anschließend wird der Heckbereich 59 des Fahrzeuges gereinigt. Hier befindet sich die Waschbürste in der Lage 60 und ist bei der verdrehbaren Ausführungsform um weitere 90° (in Fig. 8b im Uhrzeigersinn) um die vertikale Achse verdreht. Der untere Waschbürstenabschnitt 13 weist dann ebenfalls in Richtung auf den hinteren unteren Heckbereich 61 des Fahrzeugs. Bei der nicht verdrehbaren Ausführungsform entspricht die Lage 60 in Fig. 8a der Lage 51. Weiterhin werden die Waschbürsten um die horizontale Achse wieder zurückgeschwenkt, so daß der obere und mittlere Waschbürstenabschnitt geradlinig zueinander verlaufen. Für eine Reinigung des Front- oder Heckbereiches des Fahrzeuges wird die Waschbürste der erfindungsgemäßen Autowaschanlage an dem Rahmen, quer zur Längserstreckung des Fahrzeuges, bewegt.

Nach Beendigung des Waschvorganges wird bei einer Waschstraße die Waschbürste wieder um 180° zurück- oder weitergedreht, um das nächste Fahrzeug entgegenzunehmen. Bei Portalwaschanlagen erfolgt in der Regel der gleiche Waschgang in umgekehrter Verschiebung des Portals in Längsrichtung, so daß auch entgegengesetzte Verdrehungen erforderlich sind. Am Schluß befindet sich dann die Waschbürste wieder in der Ausgangslage 51.

Hierdurch erreicht die Erfindung, daß durch diese Ausbildung der Waschbürste jeder Bereich eines Fahrzeuges optimal erreicht und gereinigt wird. Insbesondere ist es möglich, eine Verdrehsteuerung um die vertikale Achse derart vorzusehen, daß die Ebene, in der die Achselemente verlaufen, stets senkrecht zu dem gerade berührten Oberflächenabschnitt der Karosserie verläuft, wobei der untere Waschbürstenabschnitt und/oder der obere Waschbürstenabschnitt stets in Richtung auf das Fahrzeug ausgerichtet sind. Weiterhin können Waschprogramme vorgesehen werden, die die erforderlichen Verdrehungen um die vertikale Achse und Verschwenkungen um die horizontale Achse entsprechend der Grundform der Fahrzeuges (Schrägheck-, Stufenheck-, Kombi-Limousine oder Kleinbus) vorprogrammieren, so daß stets ein optimales Reinigungsergebnis bewirkt werden kann.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Autowaschanlage mit einer Waschbürste (10), die im wesentlichen vertikal ausgerichtet relativ zu einem Fahrzeug (50) verschiebbar und über eine an einem Rahmen der Autwaschanlage hängenden Achsanordnung drehbar gelagert ist, wobei die Achsanordnung wenigstens zwei Achselemente (11, 12, 13, 20) aufweist, auf denen jeweils ein einen Waschbürstenabschnitt tragendes Bürstenrohrelement koaxial drehbar gelagert ist, wobei die einzelnen Achselemente winklig zueinander angeordnet sind, um die Waschbürste an den Querschnitt eines Kraftfahrzeuges anzupassen, wobei in der Lage der Waschbürste seitlich neben dem Fahrzeug (50) das untere Achselement (20) in Richtung auf das Fahrzeug angewinkelt ist, um den eingezogenen unteren Karosserieabschnitt zu reinigen **dadurch gekennzeichnet, daß** die Achsanordnung um eine vertikale Achse (31) relativ zum Rahmen verdrehbar ist.

2. Autowaschanlage nach Anspruch 1, **dadurch gekennzeichnet, daß** die Achsanordnung ein oberes und ein mittleres Achselement (18, 19) sowie ein unteres in Richtung auf das Fahrzeug abwinkelbares Achselement (20) aufweist, wobei das obere Achselement um eine horizontale Achse (42) verschwenkbar an dem Rahmen gelagert und mit dem mittleren Achselement über eine Parallelogrammführung verbunden ist.

3. Autowaschanlage nach einem oder beiden der vorhergehenden Ansprüche, **dadurch gekennzeichnet, daß** das untere Achselement (20) mit einem starren Winkel an der Achsanordnung befestigt ist.

4. Autowaschanlage nach einem der Ansprüche 1 und 2, **dadurch gekennzeichnet, daß** das untere Achselement (20) mit einem verstellbaren Winkel an der Achsanordnung befestigt ist.

5. Autowaschanlage nach einem oder mehreren der vorhergehenden Ansprüche, **dadurch gekennzeichnet, daß** die Achsanordnung um die vertikale Achse ausgehend von einer Position vor dem Fahrzeug im Laufe des Waschvorganges bis zu der Position hinter dem Fahrzeug um 180° derart verdrehbar ist, daß das untere Achselement (20) stets in Richtung auf das Fahrzeug angewinkelt verläuft.

6. Autowaschanlage nach einem oder mehreren der vorhergehenden Ansprüche, **dadurch gekennzeichnet, daB** die Verdrehung durch einen separaten Motor (40) erfolgt.

7. Autowaschanlage nach einem oder mehreren der vorhergehenden Ansprüche, **dadurch gekennzeichnet, daß** die Verdrehung mittels eines Schneckengetriebes (39) erfolgt.

8. Autowaschanlage nach einem oder mehreren der vorhergehenden Ansprüche, **dadurch gekennzeichnet, daß** die Achsanordnung an dem oberen Ende eine Lagerwelle (29) aufweist, über die die Achsanordnung drehbar und hängend an einem Tragelement (30) befestigt ist, das um eine horizontale Achse (42) verschwenkbar mit einem verschiebbaren Schlitten (43) verbunden ist, wobei die Lagerwelle und zumindest das obere Achselement hohl ausgebildet sind, um darin eine Führungsstange (47) für die Parallelogrammführung axial verschiebbar zu lagern.

9. Autowaschanlage nach einem oder mehreren der vorhergehenden Ansprüche, **dadurch gekennzeichnet, daß** die Achsanordnung mit dem oberen Ende hängend an einem Tragelement (30) befestigt ist, das um eine horizontale Achse (42) verschwenkbar mit einem verschiebbaren Schlitten (43) verbunden ist, daß das obere Achselement (18) hohl ausgebildet ist, um darin eine Führungsstange (17) für die Parallelogrammführung axial verschiebbar zu lagern, und daß der Schlitten (43) um eine vertikale Achse (31) verdrehbar und verschiebbar an dem Rahmen gelagert ist.

10. Autowaschanlage nach einem oder mehreren der vorhergehenden Ansprüche, **dadurch gekennzeichnet, daß** Mittel vorgesehen sind, die den Frontbereich, den Seitenbereich und den Heckbereich des Fahrzeuges erfassen, und daß Stellmittel vorhanden sind, um eine Verdrehung der Achsanordnung um die vertikale Achse, ausgehend von einer Position (51) der Waschbürste vor dem Fahrzeug, in der zumindest das untere Achselement (20) in Richtung auf das Fahrzeug ausgerichtet ist, um etwa 0°, wenn der Frontbereich, um etwa 90°, wenn der Seitenbereich (54) und um etwa 180", wenn der Heckbereich (59) des Fahrzeuges von der Waschbürste berührt wird, derart zu bewirken, daß das untere Achselement (20) stets in Richtung auf das Fahrzeug angewinkelt verläuft.

11. Autowaschanlage nach einem oder mehreren der vorhergehenden Ansprüche, **dadurch gekennzeichnet, daß** Stellmittel vorhanden sind, um das obere Achselement um die horizontale Achse (42) zu verschwenken, wenn der Seitenbereich des Fahrzeuges von der Waschbürste berührt wird.

12. Autowaschanlage nach einem der vorhergehenden Ansprüche, **gekennzeichnet durch** ein Waschprogramm für Stufenheck-Limousinen und Schrägheck-Limousinen, bei welchem eine Verschwenkung der Achsanordnung um die horizontale Achse nur für die Seitenwäsche und eine Verdrehung der Waschbürste um die vertikale Achse für die Seiten-, Front- und Heckwäsche derart erfolgt, daß der untere Waschbürstenabschnitt stets in Richtung auf das Fahrzeug angewinkelt ist, und/oder ein Waschprogramm für Kombi-Limousinen, bei welchem eine Verschwenkung der Achsanordnung um die horizontale Achse für die Seitenwäsche und Heckwäsche sowie einer Verdrehung der Achsanordnung um die vertikale Achse für die Seiten-, Front- und Heckwäsche derart erfolgt, daß der untere Waschbürstenabschnitt stets in Richtung auf das Fahrzeug angewinkelt ist, und/oder ein Waschprogramm für Kleinbusse oder Kastenwagen, bei welchem eine Verschwenkung der Achsanordnung um die horizontale Achse nur für die Frontwäsche und eine Verdrehung der Waschbürste um die vertikale Achse zumindest für die Seitenwäsche derart erfolgt, daß die Anwinkelung des unteres Waschbürstenabschnitts parallel zum Fahrzeug verläuft.

## Claims

1. Car wash with a washing brush (10) which is orientated essentially vertically, movably relatively to a vehicle (50) and rotatably supported above an axle arrangement suspended from a frame of the car wash mobile where the axle arrangement has at least two axle elements (11, 12, 13, 20) on which one brush tube element carrying a washing brush section runs coaxially on bearings each, in which the individual axle elements are arranged to each other angularly in order to adapt the washing brush to the cross section of a vehicle, wherein in the position of the washing brush laterally beside the vehicle (50) the lower axle element (20) is bent towards the vehicle in order to clean the recessed lower section of the car body, **characterised in that** the axle arrangement can be turned around a vertical axis (31) relatively to the frame.

2. Car wash according to claim 1, **characterised in that** the axis arrangement has an upper and a middle axis element (18,19) as well as a lower axis element (20) which can be bent towards the vehicle in which the upper axis element is supported pivotedly around a horizontal axis (42) at the frame and connected with the middle axis element via a parallelogram guidance.

3. Car wash according to one or both of the preceding claims **characterised in that** the lower axis element (20) is mounted at a rigid angle to the axis arrangement.

4. Car Wash according to one of the claims 1 and 2 **characterised in that** the lower axis element (20) is mounted at an adjustable angle to the axis arrangement.

5. Car wash according to one or more of the preceding claims **characterised in that** the axis arrangement can be turned around the vertical axis starting from a position in front of the vehicle during the wash process until a position behind the vehicle at an angle of 180° in such a way that the lower axis element (20) extends always angularly in the direction to the vehicle.

6. Car wash according to one or more of the preceding claims **characterised in that** the swinging is carried out by a separate engine (40).

7. Car wash according to one or more of the preceding claims **characterised in that** the swinging is carried out by means of a worm gear pair (39).

8. Car wash according to one or more of the preceding claims, **characterised in that** the axis arrangement has at its upper end a bearing shift (29) above which the axis arrangement is mounted rotatably and suspended from a supporting member (30) which is connected to a movable slide (43) pivotedly around a horizontal axis (42) in which the bearing shift and at least the upper axis element are designed hollow in order to bear axially movably a motion rod (47) there for the parallelogram guidance.

9. Car wash according to one or more of the preceding claims **characterised in that** the axis arrangement is mounted suspending with its upper end from a supporting member (30) which is connected pivotedly around an horizontal axis (42) with a movable slide (43), that the upper axis element (18) is designed hollow, in order to support there a motion rod (17) for the parallelogram guidance axially movable, and that the slide (43) is arranged on bearings rotatably around a vertical axis (31) and movably at the frame.

10. Car wash according to one or more of the preceding claims **characterised in that** means are provided which take hold of the front, side and rear of the vehicle, and that adjusting means are provided in order to achieve a rotation of the axis arrangement around the vertical axis starting from a position (51) of the washing brush in front of the vehicle where at least the lower axis element (20) is orientated towards the vehicle by about 0° when the front of the vehicle is touched by the washing brush, by about 90° when the side (54) is touched by the washing brush and by about 180° when the rear (59) is touched by the washing brush, in such a way that the lower axis element (20) extends always angularly towards the vehicle.

11. Car wash according to one or more of the preceding claims **characterised in that** adjusting means are provided in order to turn the upper axis element around the horizontal axis (42) when the side of the vehicle is touched by the washing brush.

12. Car wash according to one of the preceding claims **characterised by** a washing programme for notchback and fastback sedans where the turning of the axis arrangement around the horizontal axis is carried out only for washing the sides and a rotation of the washing brush around the vertical axis is carried out for washing the sides, front and back in such a way that the lower washing brush section is always angularly towards the vehicle, and/or a washing programme for station wagons where a turning of the axis arrangement around the horizontal axis is carried out for washing of the sides and back as well as a rotation of the axis arrangement around the vertical axis for washing the sides, front and back is carried out in such a way that the lower washing brush section is always angularly towards the vehicle, and/or a washing programme for minibuses or panel delivery trucks where a turning of the axis arrangement around the horizontal axis is carried out only for washing the front and a rotation of the washing brush around the vertical axis is carried out at least for washing the sides in such a way that the lower washing brush section is at angularly parallel to the vehicle.

## Revendications

1. Appareil de lavage de voiture comprenant une brosse rotative verticale (10) pouvant être déplacée par rapport à la voiture (50) et portée par le cadre de l'appareil via un ensemble d'au moins deux axes (11, 12, 13, 20) équipés chacun d'un tube rotatif et coaxial supportant une partie de la brosse et inclinés l'un par rapport à l'autre afin de pouvoir épouser la forme du côté de la voiture tandis que l'axe inférieur (20) est incliné vers la voiture afin de nettoyer la partie inférieure en retrait de la voiture, l'appareil étant **caractérisé en ce que** l'ensemble des axes peut être pivoté par rapport au cadre et autour d'un axe vertical (31).

2. Appareil de lavage de voiture selon la revendication 1, **caractérisé en ce qu'**un ensemble d'axes est constitué d'un axe supérieur, d'un axe médian (18, 19) et d'un axe inférieur (20) incliné vers la voiture, l'axe supérieur étant fixé au cadre de manière pivotante autour d'un axe horizontal (42) et lié à l'axe médian par un système de guidage parallélépipédique.

3. Appareil de lavage de voiture selon l'une ou les deux revendications précédentes, **caractérisé en ce que** l'élément inférieur (20) est lié à l'ensemble d'axes selon un angle fixe.

4. Appareil de lavage de voiture selon l'une des revendications 1 ou 2, **caractérisé en ce que** l'élément inférieur (20) est lié à l'ensemble d'axes selon un angle adaptable.

5. Appareil de lavage de voiture selon l'une ou plusieurs des revendications précédentes, **caractérisé en ce que** l'ensemble d'axes pivote pendant le lavage de la voiture autour de l'axe vertical de telle sorte que l'axe inférieur (20) reste toujours incliné vers la voiture en partant d'une position devant la voiture et en pivotant de 180° jusqu'à arriver à une position derrière la voiture.

6. Appareil de lavage de voiture selon l'une ou plusieurs des revendications précédentes, **caractérisé en ce que** le pivotement est commandé par un moteur séparé (40).

7. Appareil de lavage de voiture selon l'une ou plusieurs des revendications précédentes, **caractérisé en ce que** le pivotement est commandé par un engrenage à vis sans fin (39).

8. Appareil de lavage de voiture selon l'une ou plusieurs des revendications précédentes, **caractérisé en ce que** l'ensemble d'axes est fixé par son extrémité supérieure de fagon rotative via un arbre de rotation (29) à un élément porteur (30) pivotant autour d'un axe horizontal (42) et fixé sur un coulisseau (43) permettant un mouvement longitudinal et **en ce qu'**au moins l'arbre et l'axe supérieur sont creux afin de permettre le passage et le mouvement axial d'une tige de commande (47) du guide parallélépipédique.

9. Appareil de lavage de voiture selon l'une ou plusieurs des revendications précédentes, **caractérisé en ce que** l'ensemble d'axes est fixé par son extrémité supérieure à un élément de support (30) pivotant autour d'un axe horizontal (42) et fixé sur un coulisseau (43), **en ce que** l'axe supérieur (18) est creux afin de permettre le passage et le mouvement axial d'une tige de commande (17) du guide parallélépipédique et **en ce que** le coulisseau (43) est fixé de manière rotative au cadre par un axe vertical (31) en permettant un déplacement longitudinal.

10. Appareil de lavage de voiture selon l'une ou plusieurs des revendications précédentes, **caractérisé en ce que** des dispositifs sont prévus afin de couvrir l'avant, le côté et l'arrière de la voiture et **en ce que** des positionneurs permettent à l'ensemble d'axes de pivoter autour de l'axe vertical d'environ 0° pour l'avant (51), d'environ 90° pour le côté (54) et d'environ 180° pour l'arrière (59) de la voiture de telle fagon que l'axe inférieur (20) est toujours incliné vers la voiture.

11. Appareil de lavage de voiture selon l'une ou plusieurs des revendications précédentes, **caractérisé en ce que** des positionneurs permettent à l'axe supérieur de pivoter autour de l'axe horizontal (42) lorsque la brosse touche la partie latérale de la voiture.

12. Appareil de lavage de voiture selon l'une des revendications précédentes, **caractérisé par** l'existence d'un programme de lavage pour berlines avec ou sans coffre autorisant un pivotement de l'ensemble d'axes autour de l'axe horizontal seulement dans le cas du lavage de la face latérale de la voiture et permettant le pivotement autour de l'axe vertical dans le cas de lavage de la partie frontale, latérale et arrière de la voiture de manière à assurer une position inclinée de la brosse inférieure vers la voiture et/ou un programme de lavage pour break autorisant un pivotement de l'ensemble d'axes autour de l'axe horizontal pour le lavage de la face latérale et l'arrière de la voiture et permettant le pivotement autour de l'axe vertical dans le cas de lavage de la partie frontale, latérale et arrière de la voiture de manière à assurer une position inclinée de la brosse inférieure vers la voiture et/ou un programme de lavage pour minibus et camionnettes autorisant un pivotement de l'ensemble d'axes autour de l'axe horizontal seulement pour le lavage de l'avant de la voiture et permettant le pivotement autour de l'axe vertical au moins pour le lavage de la partie latérale de la voiture de manière à assurer une position parallèle à la voiture de la brosse inférieure.
